# EUROPÄISCHE PATENTSCHRIFT

(11) **EP 4 047 764 B1**
(45) Veröffentlichungstag und Bekanntmachung des Hinweises auf die Patenterteilung: **10.01.2024**
(21) Anmeldenummer: 22154133.7
(22) Anmeldetag: 31.01.2022
(51) Int. Cl.: H02G 3/08, H02G 3/12

(54) **INSTALLATIONSDOSE**
INSTALLATION BOX
BOÎTE D'INSTALLATION

(30) Priorität: 17.02.2021 DE 202021100773 U
(43) Veröffentlichungstag der Anmeldung: 24.08.2022
(73) Patentinhaber: OBO Bettermann Hungary Kft., 2347 Bugyi (HU)
(72) Erfinder: Harms, Heiko, 58708 Menden (DE); Ludwig, Henrik, 58706 Menden (DE)
(74) Vertreter: Haverkamp Patentanwälte PartG mbB

(56) Entgegenhaltungen:
- EP-A1- 3 540 885
- DE-A1- 2 109 548
- FR-A1- 3 011 139
- FR-A3- 2 906 342
- IT-A1- BS20 120 053

## Beschreibung

Gegenstand der Erfindung ist eine Installationsdose für elektrische/elektronische Installationen mit einem zur Aufnahme zumindest einer elektrischen/elektronischen Komponente dienenden Dosenkörper, der wenigstens eine mit einer Weichkunststoffmembran überspannte Rohreinführung zum Einführen des Endabschnittes eines Installationsrohres aufweist, wobei die Weichkunststoffmembran an einer für die Einführung des Installationsrohres vorgesehenen Position einen durch Materialverdickung gebildeten Wulst und einen durch den Wulst eingefassten Öffnungsbereich mit einer durch eine Materialschwächung bereitgestellten Einreißkontur aufweist.

Installationsdosen werden für die Installation von elektrischen und/oder elektronischen Geräten beispielsweise in Gebäuden eingesetzt. Bei derartigen Installationsdosen handelt es sich typischerweise um Hohlwanddosen, mithin um Installationsdosen, die unter Putz montiert werden. Derartige Installationsdosen verfügen über einen Dosenkörper, der durch einen Boden, eine umlaufende Wand und eine dem Boden gegenüberliegende Montageöffnung gebildet ist. Die Montageöffnung stellt diejenige Öffnung des Dosenkörpers dar, durch die die elektrischen/elektronischen Geräte eingesetzt werden. Auch wird über die Montageöffnung die Verkabelung innerhalb der Installationsdose und somit zu den von dieser abgehenden Leitungen vorgenommen. Als elektrische/elektronische Installationsgeräte kommen beispielsweise Steckdosen, Geräteträger, elektrische/elektronische Schaltgeräte, wie beispielsweise Dimmer oder dergleichen in Frage. An den Dosenkörper ist an seinen die Montageöffnung einfassenden Wandabschnitt ein in radialer Richtung nach außen vorspringender Stützflansch angeformt. Dieser dient zur Begrenzung der Einsetztiefe der Hohlwanddose, wenn diese in ein in eine Gebäudewand eingebrachtes Dosenloch eingesetzt wird. Festgesetzt wird eine solche als Hohlwanddose ausgeführte Installationsdose in der wandseitigen Dosenöffnung durch in radialer Richtung ausstellbare Klemmkörper.

In dem Dosenkörper sind Rohreinführungen zum Ein- bzw. Herausführen von Leitungen in den durch den Dosenkörper bereitgestellten Installationshohlraum hinein bzw. aus diesem heraus vorgesehen. Diese Öffnungen dienen ebenfalls zum Anschließen von Installationsrohren, beispielsweise Kunststoffwellschläuchen, in denen ein oder mehrere Kabel geführt sind.

Derartige als Hohlwanddosen ausgelegte Installationsdosen werden auch in Trockenbauwänden verbaut. Bei einem solchen Anwendungsfall ist vielfach gefordert, dass die durch die Wand bereitgestellte Winddichtigkeit zwischen zwei Räumen durch den Einbau von derartigen Installationsdosen, wenn diese von gegenüberliegenden Seiten in eine solche Trockenbauwand eingesetzt werden, nicht nachteilig beeinflusst wird. Bei Installationsdosen, bei denen es nicht auf eine Luft- und Rauchdichtigkeit ankommt, können die Rohreinführungen durch Ausbrechteile vorbereitet sein. Bei diesen Ausbrechteilen handelt es sich um Kunststoffteile aus demselben Material wie der Dosenkörper selbst, und zwar Hartkunststoff, die mit Abbrechstegen mit dem eine Rohreinführung umgebenden Material des Dosenkörpers verbunden sind. Je nach Bedarf werden dann die erforderlichen Rohreinführungen durch Ausbrechen eines solchen Ausbrechteils geöffnet. Bei winddicht ausgeführten Installationsdosen ist jede Rohreinführung mit einer Weichkunststoffmembran überspannt, so dass diese bei Nichtbenutzung geschlossen ist. In dem die Rohreinführung überspannenden Teil der Weichkunststoffmembran befindet sich gemäß einer vorbekannten Ausgestaltung ein Ringwulst, der die Position definiert, an der eine Leitung oder ein Installationsrohr eingeführt werden kann. Zum Öffnen wird der innerhalb des Ringwulsts befindliche Membranbereich - der Öffnungsbereich - herausgetrennt, und zwar durch Herausreißen des Öffnungsbereiches. Um dieses zu erleichtern und um eine Rissausbreitung in radialer Richtung nach außen zu verhindern, dient der Ringwulst und eine innenseitig zu diesem vorgesehene Einreißkontur.

Zum Heraustrennen des Öffnungsbereiches aus der Weichkunststoffmembran dient in aller Regel eine laschenartig ausgeführte Einreißhandhabe. Diese ist in der Außenseite des Öffnungsbereiches angeformt und kann zum Heraustrennen des Öffnungsbereiches mit zwei Fingern erfasst werden. Durch eine Abzieh- bzw. Herausreißbewegung wird über die Einreißhandhabe in die Einreißkontur eine Kraft eingeleitet, damit diese einreißt und sich der Riss in der umlaufenden Einreißkontur fortsetzt, sodass durch diese die Öffnung nach Heraustrennen des Öffnungsbereiches die gewünschte rundliche Form aufweist.

FR 2 906 342 A3 offenbart eine Rohreinführung in einer Wand, beispielsweise einer Installationsdose, zum Einführen eines Wellrohres. Die Rohreinführung ist in ihrer Geschlossen-Stellung durch mehrere in Umfangsrichtung angeordnete trapezförmige Segmente verschlossen. Diese Segmente sind durch Spalte voneinander getrennt. Diese Segmente sind einstückig mit der Wand hergestellt und daher aus einem Hartkunststoff gefertigt. Die zentrale Zone wird durch eine Verschlussplatte gebildet. Diese ist angeformt an eines der Segmente. Beim Einführen eines Wellrohres werden die Segmente nach außen gebogen bzw. verstellt, und zwar so weit, bis vom Durchmesser her das Wellrohr durch die Öffnung geschoben werden kann.

EP 3 540 885 A1 offenbart eine Installationsdose mit den Merkmalen des Oberbegriffs des Anspruchs 1. Die eine Rohreinführung überspannende Weichkunststoffmembran trägt außenseitig eine Einreißhandhabe. Die Einreißhandhabe ist durch eine als Materialverdünnung ausgeführte Einreißkontur an einen den Öffnungsbereich umlaufend begrenzenden Wulst angeformt.

Eine weitere Hohlwanddose mit einer durch eine Weichkunststoffmembran überspannten Rohreinführung ist aus FR 3 011 139 A1 bekannt. Die Einreißhandhabe befindet sich mittig innerhalb des Öffnungsbereiches.

Nachteilig bei diesen Hohlwanddosen zum Ausreißen des Einreißbereiches ist, dass es erforderlich ist, in einem ersten Schritt manuell die erforderliche Installationsöffnung durch Ausreißen des Öffnungsbereiches zu öffnen. Erst dann kann in die geschaffene Öffnung das gewünschte Installationsrohr oder das darin einzuführende Kabel hindurchgedrückt werden.

Um eine bestimmungsgemäße Rohreinführung und eine Abdichtungswirkung zu erzielen, ist es aus nachvollziehbaren Gründen herrschende Lehre, wie durch den vorstehend gewürdigten Stand der Technik bestätigt, dass es für eine bestimmungsgemäße Rohreinführung und Abdichtung der Weichkunststoffmembran gegenüber der Rohraußenseite erforderlich ist, den Öffnungsbereich aus der Weichkunststoffmembran vollständig herauszutrennen. Dabei ist der Innendurchmesser des den Öffnungsbereich einfassenden Wulstes angepasst an ein darin einzuführendes Installationsrohr, damit der Wulst bei in die Öffnung eingeführtem Installationsrohr in ein Wellental eines solchen Rohres eingreift, um die gewünschte Abdichtung zu erzielen. Dieses bedingt ein entsprechendes Aufweiten des Ringwulstes, um die zwischen zwei Wellentälern eines solchen Rohres befindlichen Abschnitte größeren Durchmessers hindurchschieben zu können.

Ausgehend von diesem diskutierten Stand der Technik liegt der Erfindung die Aufgabe zugrunde, eine Installationsdose der vorstehend beschriebenen Art dergestalt weiterzubilden, dass sich diese insbesondere auch als Hohlwanddose eignet und den Anforderungen an eine Winddichtigkeit genügt, wenn in eine Rohreinführung ein Installationsrohr, insbesondere ein Wellrohr oder Wellschlauch als typische Leerrohre bei elektrischen Gebäudeinstallationen eingesetzt ist und die in ihrer Handhabung zum Einführen eines Installationsrohres in eine durch eine Weichkunststoffmembran überspannte Rohreinführung gegenüber vorbekannten Hohlwanddosen dieser Art vereinfacht ist.

Gelöst wird diese Aufgabe erfindungsgemäß durch eine eingangs genannte, gattungsgemäße Installationsdose mit den Merkmalen des Anspruchs 1.

Bei dieser Installationsdose ist vorgesehen, dass der von dem Wulst eingefasste Öffnungsbereich der Weichkunststoffmembran nicht, jedenfalls nicht vollständig herausgetrennt wird. Die den Öffnungsbereich bildenden Bestandteile der Weichkunststoffmembran verbleiben somit, zumindest weitgehend, angeformt an dem Wulst der Weichkunststoffmembran. Beim Einschieben eines Rohres von außen in die durch Einreißen der Einreißkontur geschaffene Öffnung in der Weichkunststoffmembran klappen das eine oder typischerweise die mehreren Öffnungsbereichssegmente nach innen zum Doseninneren hin. Damit bilden der oder die nach innen ausgeklappten Öffnungsbereichssegmente Rückhaltestrukturen, durch die ein Herausziehen eines in die geschaffene Öffnung eingeschobenen Installationsrohres erschwert ist. Begründet ist dieses durch die Anlage der in das Doseninnere hineingeklappten bzw. eingestülpten Segmente der äußeren Zone sowie die innere Zone des Öffnungsbereiches, die an der Mantelfläche des Installationsrohres anliegen. Zusätzlich liegt der Wulst an der Mantelfläche des Installationsrohres an. Durch diese Maßnahme ist ein Umstülpen der in die geschaffene Öffnung eingedrückten Teile des Öffnungsbereiches entgegen der Einschieberichtung und somit nach außen erschwert, unter anderem da der Wulst in seiner eingestülpten Position durch die daran angeformten Weichkunststoffmembranteile des Öffnungsbereiches sowie die daran angeformten Kunststoffmembranmaterial außerhalb des Wulstes in dieser Lage abgestützt ist. Handelt es sich bei dem in die Weichkunststoffmembranöffnung eingesetzten Installationsrohr um ein Wellrohr, können der oder die Öffnungsbereichssegmente in gleicher Weise an der Mantelfläche des Wellrohres außenseitig anliegen oder je nach Positionierung des Installationsrohres in ein Wellental des Wellrohres eingreifen. Durch diese Maßnahme ist der Eingriff des Wellrohres in der Rohreinführung durch die Weichkunststoffmembran fixiert. Das oder die Öffnungsbereichssegmente, angeformt an der Innenseite des Wulstes, wirken als Lippen, die bereits mit geringer Kraft verstellt und aufgeweitet werden können. Auch bei der Auslegung der die Rohreinführung überspannenden Weichkunststoffmembran dieser Installationsdose kann der den Öffnungsbereich umlaufende Wulst in ein Wellental eines Wellrohres eingreifen. Um die erforderliche Dichtigkeit zu erzielen, ist dieses jedoch nicht erforderlich. Es ist ausreichend, wenn der Wulst sich an die Mündung eines solchen Wellentals anschmiegt. Von Vorteil einer solchen Ausgestaltung ist, dass gegenüber vorbekannten Ausgestaltungen, bei denen vorgesehen ist, dass der Wulst für die erforderliche Dichtigkeit und Fixierung des Installationsrohres in ein Wellental eingreift, dieser bei der erfindungsgemäßen Installationsdose beim Einführen eines Wellrohres weniger weit aufgeweitet werden muss, was wiederum die Montage vereinfacht. Überdies ist hierdurch die Gefahr vermieden, dass aufgrund von ggf. vorhandenen Materialfehlern, die durchaus auch infolge einer mögliche Beschädigung des Wulstes entstanden sein können, dieser bei einem übermäßigen Aufweiten des Wulstes einreißt. Schließlich soll der Wulst gerade eine Rissausbreitung in die zu diesem außenliegenden Membranbereiche verhindern.

Bei dieser Installationsdose kann der Durchmesser des Wulstes somit auch größer ausgebildet sein als die Weite eines Wellentals eines als Wellrohr ausgeführten Installationsrohres.

Vorteilhaft bei dieser Installationsdose ist, dass bei dem Öffnen eines Öffnungsbereiches kein Abfallmaterial anfällt, dieses insbesondere auch nicht bei unsachgemäßer Montage eines Installationsrohres im Doseninneren verbleibt, insbesondere wenn darin bereits Installationen montiert sind.

Da bei dieser Installationsdose das oder die Öffnungsbereichssegmente grundsätzlich nicht herausgetrennt werden, kann der Öffnungsbereich allein mit dem Installationsrohr geöffnet werden, und zwar beim Einschieben seines Endabschnittes in die Rohreinführung. Eingeschoben wird das Rohr in den Öffnungsbereich. Aufgrund der vorstehend beschriebenen Möglichkeit, den Durchmesser des Wulstes gegenüber herkömmlichen Installationsrohreinführungen, die von derartigen Weichkunststoffmembranen überspannt sind, größer vorzusehen, ist ein Einfädeln des Endabschnittes des Installationsrohres in den von dem Wulst eingefassten Öffnungsbereich vereinfacht. Das Öffnen des Öffnungsbereiches wird durch die vorbeschriebene Zonierung des Öffnungsbereiches in eine innere Zone und eine äu-βere Zone, die durch eine die innere Zone einfassende Einreißkontur voneinander getrennt sind, begünstigt.

Ferner ist vorgesehen, dass die äußere Zone durch Einreißkonturäste in einzelne Öffnungsbereichssegmente geteilt ist. Diese Segmente sind in Umfangsrichtung um die innere Zone herum benachbart zueinander angeordnet, wobei zwischen zwei Segmenten jeweils ein Einreißkonturast angeordnet ist. Die Einreißkonturäste haben einen Verlauf, der von der die innere Zone einfassenden Einreißkontur ausgeht und sich in radialer Richtung nach außen erstreckt. Die Einreißkonturäste erstrecken sich vorzugsweise bis an den Wulst oder enden nur mit einem kurzen Abstand vor diesem. Die Erstreckung der Einreißkonturäste muss nicht streng in radialer Richtung verlaufen. Dieses ist sicherlich möglich. Um ein bestimmungsgemäßes Einreißen der Einreißkonturäste beim Öffnen des Öffnungsbereiches durch Einreißen der die innere Zone einfassenden Einreißkontur zu unterstützen, ist eine Auslegung der Einreißkonturäste bevorzugt, bei der zumindest einige einen kontinuierlich gekrümmten Verlauf haben. Die Einreißkonturäste münden in der die innere Zone einfassenden Einreißzone, und zwar vorzugsweise an solchen Stellen, wo zum Öffnen der inneren Zone durch Einreißen der diese umgebenden Einreißkontur Spannungsspitzen auftreten. Spannungsspitzen werden in der die innere Zone umgebenden Einreißkontur vor allem an solchen Stellen des Umrisses der inneren Zone beim Öffnen derselben erzeugt, wo der Umriss der inneren Zone eckig ist oder mit nur einem relativ geringen Radius konvex gekrümmt ist, jedenfalls einen deutlich kleineren Krümmungsradius aufweist als die hieran angrenzenden Umrissabschnitte der inneren Zone. Daher ist in einem bevorzugten Ausführungsbeispiel vorgesehen, dass die innere Zone keinen rotationssymmetrischen Umriss aufweist. Die innere Zone könnte beispielsweise die Form einer halben Ellipse aufweisen, wobei sich der Abschnitt der Ellipse auf einen Abschnitt in Richtung seiner Langachse erstreckt. Auch die Schenkel einer solchen inneren Zone können zusätzliche Ecken im Umriss aufweisen.

Zur Segmentierung der äußeren Zone kann die Krümmung der Einreißkonturäste bei benachbarten Einreißkonturästen gleich- oder gegensinnig sein. Zudem können benachbarte Einreißkonturäste mit unterschiedlichem Radius gekrümmt sein. Man wird dieses in Abhängigkeit davon auslegen, welche Geometrie die einzelnen Oberflächensegmente der äußeren Zone aufweisen sollen. Bei einer Ausgestaltung mit einer inneren Zone, die keine rotationssymmetrische Umrissgeometrie aufweist, was bevorzugt ist, können die Einreißkonturäste spiegelsymmetrisch zur Längsachse der inneren Zone ausgeführt sein.

Bei einer Segmentierung der äußeren Zone durch Einreißkonturäste münden diese vorzugsweise in die die innere Zone umgebende Einreißkontur in einem solchen Umrissabschnitt der inneren Zone, in der Spannungsspitzen beim Öffnen derselben in die Einreißzone induziert werden. Ein an dieser Stelle initialer Riss pflanzt sich sodann in ein oder mehrere von dieser Stelle außenseitig abgehende Einreißkonturäste und entlang der die innere Zone einfassenden Einreißkontur fort.

Eine Installationsdose mit einem Öffnungsbereich als Teil einer eine Rohreinführung überspannenden Weichkunststoffmembran mit einer inneren und einer segmentierten äußeren Zone stellt eine Vielzahl von potenziellen initialen Einreißpunkten dar, in der in die Einreißkontur, umfassend die die innere Zone umgebende Einreißkontur sowie die davon in radialer Richtung nach außen abgehenden Einreißkonturäste, Spannungsspitzen beispielsweise in Form von Scherspannungen beim Eindrücken eines Installationsrohres induziert werden. Der Grund hierfür ist die in unterschiedliche Richtungen weisenden bzw. verlaufenden Einreißkonturäste. In vielen Fällen wird aus diesem Grunde eine Rissinitiierung nicht an einer einzigen Stelle, sondern an mehreren Stellen erfolgen.

Auch wenn ein Öffnen des Öffnungsbereiches innerhalb einer Weichkunststoffmembran dieser Installationsdose mit einem darin einzuführenden Installationsrohr selbst ohne weiteres möglich ist, kann die innere Zone eine nach Art einer von dieser abstehenden Lasche ausgeführten Einreißhandhabe tragen. Durch diese ist Zweierlei bereitgestellt. Zum einen kann der Öffnungsbereich manuell in herkömmlicher Weise geöffnet werden, wobei die innere Zone grundsätzlich nicht von der Weichkunststoffmembran abgerissen wird. Zum anderen kann die Einreißhandhabe mit ihrer Betätigungsfläche als Auflagefläche für ein darin einzuschiebendes Installationsrohr dienen, durch das sodann auch eine Scherkraft in der Ebene des Öffnungsbereiches aufgebracht werden kann. Nicht nur aus ergonomischen Gründen, sondern auch aus Gründen der Bereitstellung eines Rohrauflagers ist die Betätigungsfläche vorzugsweise konkav gekrümmt. Eine solche Einreißhandhabe sitzt vorzugsweise außermittig auf der inneren Zone. Typischerweise wird die innere Zone an ihrer von dem Verbindungsabschnitt gegenüberliegenden Seite durch die Einreißhandhabe begrenzt. Diese erstreckt sich vorzugsweise bis zu zwei Ecken der inneren Zone, sodass bei Ausüben einer auf die Betätigungsfläche der Einreißhandhabe wirkenden Kraft diese über die Einreißhandhabe zu diesen Ecken der inneren Zone abgeleitet wird. Auf diese Weise wird die eingeleitete Kraft konzentriert an die durch die Einreißhandhabe gebildeten Ecken im Umriss der inneren Zone übertragen, sodass die Einreißkontur beim Öffnen des Öffnungsbereichs mittels der Einreißhandhabe besonders hohen Zug- und Scherkräften ausgesetzt ist, sodass in aller Regel mit bereits geringer Kraft wirkungsvoll ein Einreißen der Einreißkontur initiiert werden kann.

Die Einreißkontur ist vorzugsweise als Materialverdünnung ausgeführt. Diese kann jedoch auch auf andere Weise zum Herbeiführen einer Materialschwächung entlang der Einreißkontur realisiert sein.

Nachfolgend ist die Erfindung anhand eines Ausführungsbeispiels unter Bezugnahme auf die beigefügten Figuren beschrieben. Es zeigen:
- **Fig. 1:**: Eine perspektivische Ansicht einer Installationsdose mit einer Detailvergrößerung eines Abschnittes einer eine Rohreinführung überspannenden Weichkunststoffmembran gemäß einer ersten Ausgestaltung,
- **Fig. 2:**: eine Teilschnittdarstellung der Installationsdose der Figur 1 durch eine Rohreinführung mit einem darin eingesetzten Installationsrohr,
- **Fig. 3:**: eine Teilschnittdarstellung der Installationsdose der Figur 1 durch eine Rohreinführung mit einem darin im eingesetzten Installationsrohr mit einem größeren Durchmesser als das in Figur 2 gezeigte und
- **Fig. 4:**: eine perspektivische Ansicht einer Installationsdose mit einer Detailvergrößerung eines Abschnittes einer eine Rohreinführung überspannenden Weichkunststoffmembran gemäß einer weiteren Ausgestaltung.

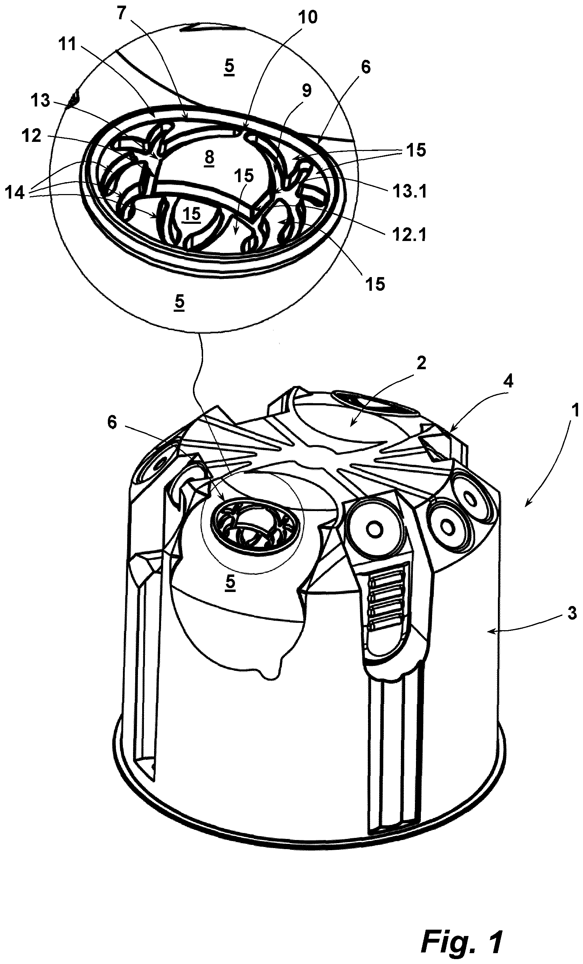

Eine als Hohlwanddose ausgeführte Installationsdose 1 ist in Figur 1 mit Blickrichtung auf ihre Rückseite perspektivisch dargestellt. Die Installationsdose 1 verfügt über einen Boden 2, eine umlaufende Wand 3 und einen Übergangsabschnitt 4 zwischen der Wand 3 und dem Boden 2. Der Übergangsabschnitt 4 ist gegenüber der Wand 3 und gegenüber dem Boden 2 geneigt. Die Installationsdose 1 ist an ihrer dem Boden 2 gegenüberliegenden Seite offen. Durch die Installationsdose 1 wird ein Installationsvolumen zur Verfügung gestellt, in das elektrische/elektronische Komponenten installiert werden können. An dem dem Übergangsabschnitt 4 gegenüberliegenden Ende ist an die Wand 3 ein in radialer Richtung nach außen abragender Flansch angeformt. Dieser dient als Anschlag beim Einsetzen der Installationsdose 1 in eine zuvor in eine Trockenbauwand eingebrachte Dosenöffnung.

Die Installationsdose 1 besteht bei dem dargestellten Ausführungsbeispiel größtenteils aus einem für derartige Zwecke üblichen Hartkunststoff. Vor allem im Übergangsbereich verfügt die beispielhaft dargestellte Installationsdose 1 über Rohreinführungen, die jeweils mit einer Weichkunststoffmembran 5 überspannt sind. Herstellt ist die Installationsdose 1 im Wege eines 2-K-Spritzgussverfahrens.

Im Vordergrund der nachstehenden Beschreibung steht die Weichkunststoffmembran 5. Diese überspannt eine in der Figur nicht erkennbare Rohreinführung innerhalb des Hartkunststoffbestandteils der Installationsdose 1. Derjenige Bereich der Weichkunststoffmembran 5, in den ein Installationsrohr, beispielsweise ausgeführt als Wellrohr, mit einem Endabschnitt eingesetzt werden soll, ist an der Weichkunststoffmembran 5 durch einen durch Materialverdickung gebildeten Wulst 6 kenntlich gemacht. Die Umrisskontur des Wulstes 6 ist kreisförmig, kann jedoch auch andere Umrissgeometrien aufweisen. Lediglich aufgrund der perspektivischen Darstellung erscheint dieser oval. Der Wulst 6 ist bei dem dargestellten Ausführungsbeispiel umlaufend, was bevorzugt ist. Der Wulst 6 fasst einen Öffnungsbereich 7 ein. Der Öffnungsbereich 7 ist derjenige Bereich der Weichkunststoffmembran 5, der geöffnet wird, um ein Installationsrohr einschieben zu können. Der Öffnungsbereich 7 ist zoniert aufgebaut. Der Öffnungsbereich 7 verfügt über eine innere Zone 8. Die innere Zone 8 ist durch eine bei dem dargestellten Ausführungsbeispiel durch eine Materialverdünnung bereitgestellte Einreißkontur 9 außenseitig begrenzt. Die Einreißkontur 9 fasst die innere Zone 8 ein, jedoch nicht umlaufend. Die innere Zone 8 ist durch einen Verbindungsabschnitt 10 mit dem Wulst 6 verbunden. Die innere Zone 8 ist, getrennt durch die Einreißkontur 9, von einer äußeren Zone 11 umgeben. Die innere Zone 8 und die äußere Zone 11 weisen dieselbe Materialstärke der Weichkunststoffmembran 5 auf. Diese ist gegenüber der Materialstärke der Einreißkontur 9 etwa drei bis sechs Mal dicker.

Die innere Zone 8 weist eine nicht rotationssymmetrische Umrissgeometrie auf. Dem Verbindungsabschnitt 10 gegenüberliegend ist die innere Zone 8 durch einen konkaven Abschnitt ihrer Umrissgeometrie begrenzt. Dieser Abschnitt der inneren Zone 8 endet zu beiden Seiten jeweils in einer Ecke 12, 12.1. In seiner Erstreckung von dem Verbindungsabschnitt 10 zu der jeweiligen Ecke 12 bzw. 12.1 ist in dem Konturverlauf der inneren Zone 8 jeweils noch eine Ecke 13, 13.1 ausgebildet. Während die die Ecken 12, 12.1 bildenden Wandabschnitte der inneren Zone einen Winkel von weniger als 90° einfassen, beträgt der durch die die Ecken 13, 13.1 bildenden Wandabschnitte eingeschlossene Winkel bei dem dargestellten Ausführungsbeispiel etwa 160°. Wesentlich an der Auslegung der Kontur der inneren Zone bei dem dargestellten Ausführungsbeispiel ist die Ausbildung einer nicht kontinuierlichen, gekrümmten äußeren Kontur, was durch die Eckausbildungen erreicht ist.

Die innere Zone 8 befindet sich in einer außerzentrischen Anordnung innerhalb des Öffnungsbereiches 7. Demzufolge weist die äußere Zone 11 ebenfalls eine nicht konstante radiale Erstreckung auf. Diese ist am geringsten benachbart zu dem Verbindungsabschnitt 10 und am größten in dem Abschnitt der äußeren Zone 11, der dem Scheitel des konkaven Konturabschnittes der inneren Zone 8 gegenüberliegt. Die äußere Zone 11 ist durch mehrere Einreißkonturäste 14 in mehrere Segmente 15, von denen in der Figur nur einige mit diesem Bezugszeichen kenntlich gemacht sind, zerteilt. Die Einreißkonturäste 14 beginnen in radialer Richtung an der die innere Zone 8 einfassenden Einreißkontur 9 und erstrecken sich nach außen an die zu dem Öffnungsbereich 7 weisenden Seite des Wulstes 6. Der Verlauf der Einreißkonturäste 14 ist, wie die Ausschnittsvergrößerung der Figur 1 deutlich macht, gekrümmt, wobei die Krümmungen benachbarter Einreißkonturäste 14 in bestimmten Bereichen gleichsinnig und in anderen Bereichen gegensinnig zueinander angeordnet sind. Bei dem dargestellten Ausführungsbeispiel sind die Einreißkonturäste 14 in Bezug auf eine Mittellängsebene durch die innere Zone 8 spiegelsymmetrisch ausgeführt. Die Mittellängsebene erstreckt sich durch den Verbindungsabschnitt 10 und verläuft über den Scheitel des den Verbindungsabschnitt 10 gegenüberliegenden konkaven Umrissabschnitt der inneren Zone 8. Einige Einreißkonturäste 14 münden gemeinsam in die Einreißkontur 9, haben mithin einen gemeinsamen Ursprung an der Einreißkontur 9. Dieses ist beispielsweise der Fall bei den Einreißkonturästen 14, die an der gegenüberliegenden Seite der Ecken 13, 13.1 der inneren Zone 8 in die Einreißkontur 9 münden. Erreicht wird hierdurch, dass diese auf jeder Seite der inneren Zone 8 jeweils drei Einreißkonturäste 14 an einem Ort in die Einreißkontur münden, in dem, bedingt durch die Ecken 13, 13.1, Spannungsspitzen bei einer Beanspruchung des Öffnungsbereiches 7 auftreten. Aus demselben Grunde münden ebenfalls Einreißkonturäste 14 in die Einreißkontur 9 an der den Ecken 12, 12.1 gegenüberliegenden Seite.

Infolge der vorbeschriebenen Zonierung des Öffnungsbereiches 7, unterstützt durch die Segmentierung der äußeren Zone 11, kann der Öffnungsbereich 7 ohne weiteres durch ein darin einzuführendes Installationsrohr geöffnet werden, schlichtweg indem dieses mit einem Endabschnitt in den Öffnungsbereich 7 der Weichkunststoffmembran 5 eingedrückt wird. Bei dem dargestellten Ausführungsbeispiel ist der Durchmesser des Wulstes 6 nur wenige Millimeter, beispielsweise 5mm, kleiner als der maximale Außendurchmesser des Endabschnittes des Installationsrohres. Daher ist ein Einführen des Endabschnittes eines Installationsrohres vereinfacht. Mithin ist bei einem solchen Öffnungsvorgang des Öffnungsbereiches 7 der Wulst 6 selbst weniger belastet. Die auf den Öffnungsbereich 7 einwirkende Druckkraft führt zwangsläufig zu einem Einreißen an einer oder mehreren Stellen der Einreißkonturen 9, 14, von welchen initialen Rissausbildungen sich diese entsprechend dem Verlauf der Einreißkonturen 9, 14 fortpflanzen. Beim weiteren Einschieben werden die innere Zone 8 und die Segmente 15 der äußeren Zone 11 durch das Installationsrohr in Richtung zum Doseninneren verstellt. Diese liegen bei einem Installationsrohr mit einer glatten äußeren Mantelfläche nach Art einer Dichtlippe auf der äußeren Mantelfläche an. Die Segmentierung der äußeren Zone hat infolge der diese trennenden Einreißkonturäste 14 zur Folge, dass sich keine Falten bilden, mithin hierdurch eine dichte Anlage unterstützt wird. Aufgrund des geringeren Durchmessers des Wulstes 6 liegt auch dieser an der äußeren Mantelfläche eines Installationsrohres an. Die nach innen ausgestellten Segmente haben auch eine gewisse Rückhaltefunktion.

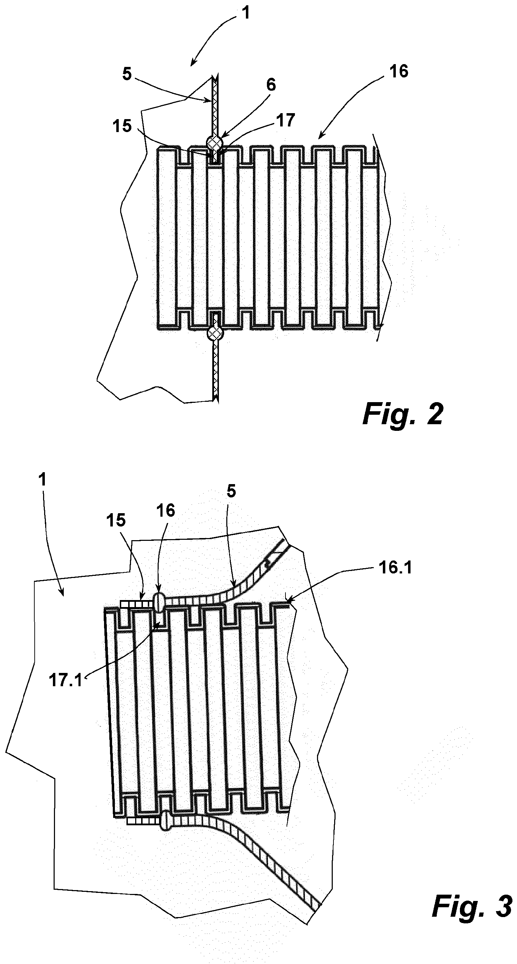

Bei Verwendung eines als Wellrohr ausgeführten Installationsrohres 16 (siehe Figur 2) wird dieses in gleicher Weise in den Öffnungsbereich 7 eingeführt, wie dieses vorbeschrieben ist. Die Segmente 15 der äußeren Zone 11 können bei einem solchen Installationsrohr 16 als Rückhaltemittel dienen, wenn diese in ein Wellental 17 des Installationsrohres 16 eingreifen. Der Wulst 16, der einen größeren Durchmesser aufweist als die lichte Weite eines Wellentals 17, liegt aufgrund der vorbeschriebenen Dimensionierung unter einer gewissen Vorspannung an der Mündung des Wellentals 17 an der Außenseite des Installationsrohres 16 an. Auf diese Weise ist nicht nur eine besondere Auszugsicherung für das Installationsrohr 16, sondern auch die gewünschte Winddichtigkeit bereitgestellt. Figur 2 zeigt das in den Öffnungsbereich 7 der Weichkunststoffmembran 5 eingeführte Installationsrohr 16.

Figur 3 zeigt die Installationsdose 1 mit einem in die Rohreinführung eingesetzten Installationsrohr 16.1. Auch das Installationsrohr 16.1 ist als Wellrohr ausgeführt. Das Installationsrohr 16.1 ist in seinem Außendurchmesser größer als das Installationsrohr 16 der Figur 2. Aus diesem Grunde ist der geöffnete Öffnungsbereich der Weichkunststoffmembran 5 infolge der Einschiebebewegung des Installationsrohres 16.1 in Richtung zum Doseninneren hin eingedrückt bzw. eingestülpt. Die an den Wulst 6 angeformten Segmente 15 liegen mit ihrer Flachseite - der ursprünglich nach außen weisenden Seite - an der Mantelfläche des Installationsrohres 16.1 an. Der Wulst 6 verschließt ebenso wie bei der Darstellung des Ausführungsbeispiels der Figur 2 ein Wellental 17.1 des Installationsrohres 16.1. Durch die Anlage der Segmente 15 und ebenso der inneren Zone 8 an der Mantelfläche des Installationsrohres 16.1 wird durch diese Anlage nicht nur ein zusätzlicher Dichtungsbereich bereitgestellt, sondern zugleich eine Rückzugshemmung realisiert. Die nach innen eingeklappten Segmente 15 der äußeren Zone 11 und die innere Zone 8 geben die Lage des Wulstes 6 infolge ihrer Anlage an der Mantelfläche des Installationsrohres 16.1 vor. Einer Drehung des Wulstes 6 um seine Längsachse ist dadurch wirksam entgegengewirkt, was die Auszugskräfte erhöht.

Dieselben Ausführungen gelten gleichermaßen auch für ein gleichgroßes Installationsrohr wie in Figur 2 bei entsprechender Auslegung des Öffnungsbereiches.

Die in Figur 3 gezeigte Anlageanordnung der erhöhten Dichtigkeit stellt sich auch ein, wenn der Wulst 6 nicht in einem Wellental 17.1 zu liegen kommt. Da die Segmente 15 und auch die innere Zone 8 in radialer Richtung eine größere Erstreckung haben als die Weite eines Wellentals 17.1, sind auch bei einer solchen Anlage in Längserstreckung des Installationsrohres 16.1 zumindest zwei Dichtbereiche gegeben.

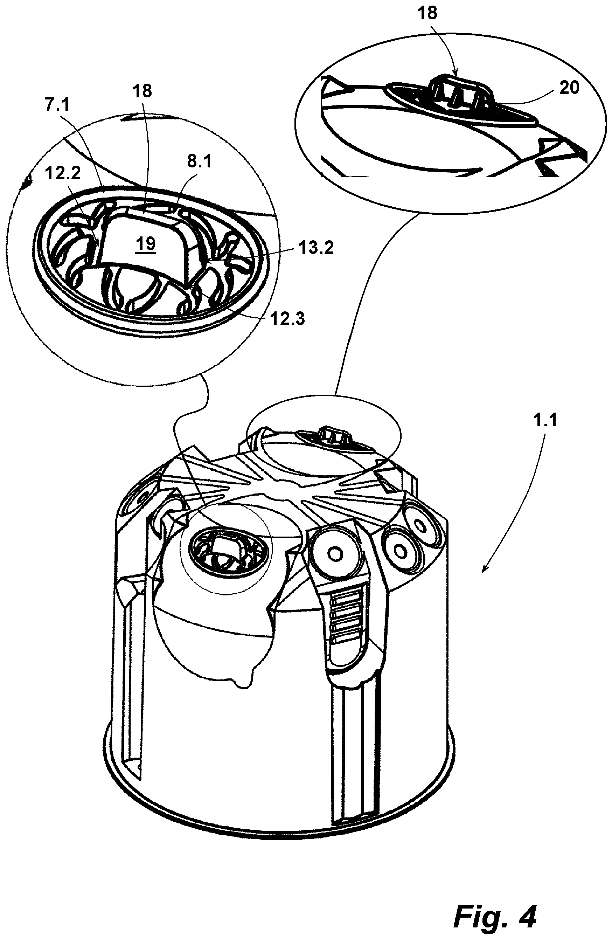

Figur 4 zeigt ein weiteres Ausführungsbeispiel einer Installationsdose 1.1. Diese ist genauso aufgebaut wie die Installationsdose 1 des Ausführungsbeispiels der Figuren 1 und 2. Die Installationsdose 1.1 unterscheidet sich von der zuvor beschriebenen Installationsdose 1 lediglich dadurch, dass die innere Zone 8.1 des Öffnungsbereiches 7.1 eine nach Art einer Lasche ausgebildete Einreißhandhabe 18 trägt. Die Einreißhandhabe 18 verfügt über eine konkav ausgeführte Betätigungsfläche 19. Die Betätigungsfläche 19 setzt in die Einreißhandhabe 18 den konkav gekrümmten Umrissabschnitt der inneren Zone 8.1 fort. Die konkave Auslegung der Betätigungsfläche 19 dient auch dem Zweck, dass diese als Auflage für die Mantelfläche eines Installationsrohres genutzt werden kann, um eine Krafteinleitung in den Öffnungsbereich 7.1 in der Ebene des Öffnungsbereiches 7.1 vornehmen zu können. Die Einreißhandhabe 18 kann auch genutzt werden, wenn der Öffnungsbereich 7.1 manuell geöffnet werden soll. Abgerissen werden soll die innere Zone 8.1 bei einem solchen manuellen Öffnen jedoch nicht.

Das Einleiten einer Öffnungskraft in die Einreißhandhabe 18 führt zu einer Krafteinleitung in die Ecken 12.2, 12.3, 13.2 in der Umrissgeometrie der inneren Zone 8.1. Die Materialstärke der Einreißhandhabe 18 ist ausgelegt, damit deren der Betätigungsfläche 19 gegenüberliegende Rückseite in den weiteren Ecken 13.2 ausläuft. Somit wird auch in diese Ecken 13.2 unmittelbar bei einer Bewegung der Einreißhandhabe 18 eine Öffnungskraft eingeleitet. Zum Stützen der Einreißhandhabe 18 ist diese rückseitig über mehrere Stützrippen 20 an der inneren Zone 8.1 abgestützt.

Der Öffnungsbereich 7.1 der Installationsdose 1.1 kann auf die gleiche Weise geöffnet werden, wie dieses vorstehend zu der Installationsdose 1 beschrieben ist. Durch die zusätzliche Einreißhandhabe 18 bestehen weitere Öffnungsmöglichkeiten.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen näher erläutert werden müsste.

### Bezugszeichenliste

- 1, 1.1: Installationsdose
- 2: Boden
- 3: Wand
- 4: Übergangsabschnitt
- 5: Membran
- 6: Wulst
- 7, 7.1: Öffnungsbereich
- 8, 8.1: innere Zone
- 9: Einreißkontur
- 10: Verbindungsabschnitt
- 11: äußere Zone
- 12, 12.1, 12.2, 12.3: Ecke
- 13, 13.1, 13.2: Ecke
- 14: Einreißkonturast
- 15: Segment
- 16, 16.1: Installationsrohr
- 17, 17.1: Wellental
- 18: Einreißhandhabe
- 19: Betätigungsfläche
- 20: Stützrippe

## Patentansprüche

1. Installationsdose für elektrische/elektronische Installationen mit einem zur Aufnahme zumindest einer elektrischen/elektronischen Komponente dienenden Dosenkörper, der wenigstens eine mit einer Weichkunststoffmembran (5) überspannte Rohreinführung zum Einführen des Endabschnittes eines Installationsrohres (16) aufweist, wobei die Weichkunststoffmembran (5) an einer für die Einführung des Installationsrohres (16, 16.1) vorgesehenen Position einen durch Materialverdickung gebildeten Wulst (6) und einen durch den Wulst (6) eingefassten Öffnungsbereich (7, 7.1) mit einer durch eine Materialschwächung bereitgestellten Einreißkontur (9, 14) aufweist, **dadurch gekennzeichnet, dass** der Öffnungsbereich (7, 7.1) eine innere Zone (8) und eine äußere, an den Wulst (6) angeschlossene Zone (11) aufweist, welche äußere Zone (11) die innere Zone (8) einfasst und durch die Einreißkontur (9) von der inneren Zone (8) getrennt ist, und welche innere Zone (8) mit einem Verbindungsabschnitt (10) an den Wulst (6) angeschlossen ist und dass die äußere Zone (11) durch von der die innere Zone (8, 8.1) begrenzenden Einreißkontur (9) ausgehende Einreißkonturäste (14) in mehrere, in Umfangsrichtung benachbart zueinander angeordnete Segmente (15) geteilt ist.

2. Installationsdose nach Anspruch 1, **dadurch gekennzeichnet, dass** die Einreißkonturäste (14) sich bis an den Wulst (6) erstrecken.

3. Installationsdose nach einem der Ansprüche 1 oder 2, **dadurch gekennzeichnet, dass** die Einreißkonturäste (14) einen kontinuierlich gekrümmten Verlauf haben.

4. Installationsdose nach Anspruch 3, **dadurch gekennzeichnet, dass** in Umfangsrichtung der äußeren Zone (11) benachbarte Einreißkonturäste (14) einen unterschiedlichen Krümmungsradius aufweisen und/oder gegensinnig zueinander gekrümmt sind.

5. Installationsdose nach einem der Ansprüche 1 bis 4, **dadurch gekennzeichnet, dass** zumindest einige Einreißkonturäste (14) eine gemeinsame Verbindung zu der die innere Zone (8, 8.1) begrenzenden Einreißkontur (9) haben.

6. Installationsdose nach einem der Ansprüche 1 bis 5, **dadurch gekennzeichnet, dass** die innere Zone (8.1) eine nach Art einer von dieser abstehenden Lasche ausgeführte Einreißhandhabe (18) trägt.

7. Installationsdose nach Anspruch 6, **dadurch gekennzeichnet, dass** die Einreißhandhabe (18) eine Betätigungsfläche (19) aufweist und die Einreißhandhabe (18) an ihrer der Betätigungsfläche (19) gegenüberliegenden Seite mittels zumindest einer Stützrippe (20) an der inneren Zone (8.1) abgestützt ist.

8. Installationsdose nach Anspruch 7, **dadurch gekennzeichnet, dass** die Betätigungsfläche (19) konkav geformt ist.

9. Installationsdose nach Anspruch 7 oder 8, **dadurch gekennzeichnet, dass** die Einreißhandhabe (18) randlich bezüglich der inneren Zone (8.1) angeordnet ist und ihre Betätigungsfläche (19) die innere Zone (8.1) an dieser Seite begrenzt.

10. Installationsdose nach Anspruch 8 oder 9, **dadurch gekennzeichnet, dass** der Verbindungsabschnitt, mit dem die innere Zone (8.1) an den Wulst angeschlossen ist, sich an der konkaven Betätigungsfläche (19) der Einreißhandhabe (18) wegweisenden Seite befindet.

11. Installationsdose nach einem der Ansprüche 1 bis 10, **dadurch gekennzeichnet, dass** die Einreißkontur (9) und die zu dieser gehörenden Einreißkonturäste (14) als Materialverdünnung ausgeführt sind.

12. Installationsdose nach Anspruch 11, **dadurch gekennzeichnet, dass** die Materialverdünnung nur einseitig in die Weichkunststoffmembran in ihrem Öffnungsbereich (7, 7.1) eingebracht ist.

13. Installationsdose nach Anspruch 12, **dadurch gekennzeichnet, dass** die Materialverdünnung dosenaußenseitig in die Weichkunststoffmembran (5) eingebracht ist.

14. Installationsdose nach einem der Ansprüche 1 bis 13, **dadurch gekennzeichnet, dass** die äußere Zone (11) und die innere Zone (8) eine gleiche Materialstärke in der Weichkunststoffmembran (5) aufweisen.

15. Installationsdose nach einem der Ansprüche 1 bis 14, **dadurch gekennzeichnet, dass** die den Wulst (6) bildende Materialverdickung durch eine bezüglich der benachbarten Bereiche der Weichkunststoffmembran (5) außenseitige und innenseitige Materialverdickung gebildet ist.

## Claims

1. Installation box for electrical/electronic installations with a box body serving to receive at least one electrical/electronic component, which comprises at lest one tube insertion guide, covered by a soft plastic membrane (5), for the insertion of an installation tube (16), wherein the soft plastic membrane (5) comprises, at a position provided for with regard to the insertion of the installation tube (16, 16.1), a bead (6) formed by material thickening and an opening region (7, 7.1) encompassed by the bead (6), with a tear contour (9, 14) provided by a weakening of the material, **characterised in that** the opening region (7, 7.1) comprises an inner zone (8) and an outer zone (11) connected to the bead (6), the said outer zone (11) encompassing the inner zone (8) and being separated from the inner zone (8) by the tear contour (9), and the said inner zone (8) is connected by means of a connection section (10) to the bead (6), and that the outer zone (11) is divided by tear contour branches (14), which originate from the tear contour (9) delimiting the inner zone (8, 8.1), into several segments (15) arranged adjacent to one another in the circumferential direction.

2. Installation box according to claim 1, **characterised in that** the tear contour branches (14) extend as far as the bead (6).

3. Installation box according to one of claims 1 or 2, **characterised in that** the tear contour branches (14) have a continuously curved course.

4. Installation box according to claim 3, **characterised in that** tear contour branches (14) adjacent to the outer zone (11) in the circumferential direction exhibit a different curvature radius and/or are slightly curved opposite to one another.

5. Installation box according to any one of claims 1 to 4, **characterised in that** at least some tear contour branches (14) have a common connection to the tear contour (9) delimiting the inner zone (8, 8.1).

6. Installation box according to any one of claims 1 to 5, **characterised in that** the inner zone (8.1) carries a tear handle (18) which is configured in the form of a tab projecting from it.

7. Installation box according to claim 6, **characterised in that** the tear handle (18) comprises an actuation surface (19), and the tear handle (18) is supported on its side opposite the actuation surface (19) by means of at least one support rib (20) at the inner zone (8.1).

8. Installation box according to claim 7, **characterised in that** the actuation surface (19) is formed as concave.

9. Installation box according to claim 7 or 8, **characterised in that** the tear handle (18) is arranged at the edge in relation to the inner zone (8.1) and its actuation surface (19) delimits the inner zone (8.1) on this side.

10. Installation box according to claim 8 or 9, **characterised in that** the connection section, by which the inner zone (8.1) is connected to the bead, is located at the concave actuation surface (19) facing away from the tear handle (18).

11. Installation box according to any one of claims 1 or 10, **characterised in that** the tear contour (9), and the tear contour branches (14) pertaining to it, are configured as thinning of material.

12. Installation box according to claim 11, **characterised in that** the material thinning is introduced only on one side into the soft plastic membrane in its opening region (7, 7.1).

13. Installation box according to claim 12, **characterised in that** the material thinning is introduced into the soft plastic membrane (5) on the outside of the box.

14. Installation box according to any one of claims 1 or 13, **characterised in that** the outer zone (11) and the inner zone (8) exhibit the same material thickness in the soft plastic membrane (5).

15. Installation box according to any one of claims 1 or 14, **characterised in that** the material thickening forming the bead (6) is formed by a material thickening on the outside and on the inside in relation to the adjacent regions of the soft plastic membrane (5).

## Revendications

1. Boîte d'installation pour des installations électriques/électroniques avec un corps de boîte servant à recevoir au moins un composant électrique/électronique, laquelle présente au moins un engagement de tuyau, recouvert d'une membrane (5) en matière plastique souple, destiné à engager le tronçon d'extrémité d'un tuyau d'installation (16), laquelle membrane (5) en matière plastique souple présente, dans une position prévue pour l'engagement du tuyau d'installation (16, 16.1), un bourrelet (6) formé par un épaississement du matériau et une zone d'ouverture (7, 7.1), sertie par le bourrelet (6), avec un contour d'arrachage (9, 14) mis à disposition par un affaiblissement du matériau, **caractérisée en ce que** la zone d'ouverture (7, 7.1) présente une zone (8) intérieure et une zone (11) extérieure raccordée au bourrelet (6), laquelle zone (11) extérieure englobe la zone (8) intérieure et est séparée par le contour d'arrachage (9) de la zone (8) intérieure, et laquelle zone (8) intérieure est raccordée par un tronçon de liaison au bourrelet (6) et **en ce que** la zone (11) extérieure est divisée en plusieurs segments (15), disposés les uns à côté des autres dans le sens de la circonférence, par des branches de contour d'arrachage (14) partant du contour d'arrachage (9) délimitant la zone (8, 8.1) intérieure.

2. Boîte d'installation selon la revendication 1, **caractérisée en ce que** les branches de contour d'arrachage (14) s'étendent jusqu'au bourrelet (6).

3. Boîte d'installation selon l'une des revendications 1 ou 2, **caractérisée en ce que** les branches de contour d'arrachage (14) ont un tracé courbe en continu.

4. Boîte d'installation selon la revendication 3, **caractérisée en ce que** les branches de contour d'arrachage (14) voisines dans le sens de la circonférence de la zone (11) extérieure présentent un rayon de courbure différent et/ou sont courbées l'une vers l'autre dans un sens opposé.

5. Boîte d'installation selon l'une des revendications 1 à 4, **caractérisée en ce qu'**au moins certaines branches de contour d'arrachage (14) ont une liaison commune avec le contour d'arrachage (9) délimitant la zone (8, 8.1) intérieure.

6. Boîte d'installation selon l'une des revendications 1 à 5, **caractérisée en ce que** la zone (8.1) intérieure supporte une tirette d'arrachage (18) réalisée à la manière d'une languette en saillie par rapport à cette zone.

7. Boîte d'installation selon la revendication 6, **caractérisée en ce que** la tirette d'arrachage (18) présente une surface de manipulation (19) et la tirette d'arrachage (18) est en appui sur la zone (8.1) intérieure au moyen d'au moins un renfort d'appui (20) sur son le côté opposé à la surface de manipulation (19).

8. Boîte d'installation selon la revendication 7, **caractérisée en ce que** la surface de manipulation (19) est de forme concave.

9. Boîte d'installation selon la revendication 7 ou 8, **caractérisée en ce que** la tirette d'arrachage (18) est disposée sur le bord par rapport à la zone (8.1) intérieure et que sa surface de manipulation (19) délimite la zone (8.1) intérieure de ce côté.

10. Boîte d'installation selon la revendication 8 ou 9, **caractérisée en ce que** le tronçon de liaison par lequel la zone (8.1) intérieure est raccordée au bourrelet, se trouve sur le côté opposé à la surface de manipulation (19) concave de la tirette d'arrachage (18).

11. Boîte d'installation selon l'une des revendications 1 à 10, **caractérisée en ce que** le contour d'arrachage (9) et les branches de contour d'arrachage (14) faisant partie de ce dernier sont réalisés par un amincissement du matériau.

12. Boîte d'installation selon la revendication 11, **caractérisée en ce que** l'amincissement du matériau est seulement intégré unilatéralement dans la membrane en matière plastique souple dans sa zone (7, 7.1) d'ouverture.

13. Boîte d'installation selon la revendication 12, **caractérisée en ce que** l'amincissement du matériau est intégré sur la face extérieure de la boîte dans la membrane (5) en matériau plastique souple.

14. Boîte d'installation selon l'une des revendications 1 à 13, **caractérisée en ce que** la zone (11) extérieure et la zone (8) intérieure présentent une épaisseur de matériau identique au niveau de la membrane (5) en matière plastique souple.

15. Boîte d'installation selon l'une des revendications 1 à 14, **caractérisée en ce que** l'épaississement du matériau formant le bourrelet (6) est réalisé par un épaississement du matériau sur la face extérieure et sur la face intérieure par rapport aux zones voisines de la membrane (5) en matière plastique souple.
